# EUROPÄISCHE PATENTSCHRIFT

(11) **EP 0 586 734 B1**
(45) Veröffentlichungstag und Bekanntmachung des Hinweises auf die Patenterteilung: **20.11.1996**
(21) Anmeldenummer: 92115473.8
(22) Anmeldetag: 10.09.1992
(51) Int. Cl.: B60Q 11/00

(54) **Beleuchtungsvorrichtung für Kraftfahrzeuge**
Lighting device for vehicle
Dispositif d'éclairage pour véhicule

(43) Veröffentlichungstag der Anmeldung: 16.03.1994
(73) Patentinhaber: Bayerische Motoren Werke Aktiengesellschaft, 80788 München (DE)
(72) Erfinder: Griessbach, Robert, W-8011 Höhenkirchen-Siegertsbrunn (DE)

(56) Entgegenhaltungen:
- EP-A- 0 432 624
- DE-A- 1 488 902
- DE-A- 3 927 496
- US-A- 3 479 557
- US-A- 3 814 984
- US-A- 4 213 075
- US-A- 4 380 718
- US-A- 4 495 444

## Beschreibung

Die Erfindung bezieht sich auf eine Beleuchtungsvorrichtung nach dem Oberbegriff des Patentanspruchs 1. Eine derartige Beleuchtungsvorrichtung ist aus der US 4,213,075 A und der US 3,479,557 A bekannt. In beiden Fällen wird bei Zweifaden-Glühlampen der Fernlicht-Glühfaden mit geringerer Leistung versorgt, wenn der Abblendlicht-Glühfaden ausfällt.

Es sind ferner Beleuchtungsvorrichtungen heutzutage bei Kraftfahrzeugen üblich, bei denen beispielsweise die Abblendlicht- und die Standlicht-Funktion mittels zweier Scheinwerfer realisiert sind, die jeweils einen Glühfaden (Leuchtmittel) für Scheinwerfer- und Standlichtbetrieb besitzen. Entsprechend ist das Rücklicht durch mindestens zwei Rück-Leuchten und das Bremslicht durch ebenfalls mindestens zwei Brems-Leuchten realisiert, die jeweils paarweise nebeneinander bzw. sogar in einer einzigen Leuchtenkammer integriert angeordnet sind. In diesem Fall ist es auch bekannt, eine Zweifaden-Glühlampe als Leuchtmittel für die beiden Beleuchtungsfunktionen Bremslicht- und Rücklicht zu verwenden, deren beide Glühfäden im Bedarfsfall gemeinsam oder getrennt, jedoch gemeinsam mit dem entsprechenden Glühfaden der räumlich getrennt angeordneten anderen Leuchte geschaltet sind. Als weitere Beleuchtungsfunktion ist beispielsweise die des Nebel-Rücklichts von Interesse, das in aller Regel räumlich benachbart zu oder integriert mit einem Rücklicht bzw. Bremslicht des Kraftfahrzeugs angeordnet ist. Die bekannten Beleuchtungsvorrichtungen weisen eine Vielzahl von Leuchtmitteln auf, die beispielsweise im Falle der Zweifaden-Glühlampen anschluß- und ansteuertechnisch problematisch sind und die darüber hinaus einen großen Verkabelungsaufwand erfordern.

Der Erfindung liegt die Aufgabe zugrunde, eine Beleuchtungsvorrichtung der eingangs genannten Art zu schaffen, die sich durch einen deutlich verringerten Anschluß-, Schaltungs- und Steuerungsaufwand auszeichnet und die darüber hinaus eine einfache Möglichkeit bietet, zumindest im Bedarfsfall, d.h. bei Ausfall eines Leuchtmittels, eine Notfallfunktion auszuführen.

Die Erfindung löst diese Aufgabe durch die kennzeichnenden Merkmale des Patentanspruchs 1.

Nach dem Patentanspruch 1 soll eines der ersten Leuchtmittel in der Lage sein, zumindest im Bedarfsfall die Beleuchtungsfunktion der zumindest benachbart angeordneten Leuchte für die zweite Beleuchtungsfunktion zu übernehmen. Dies wird möglich durch die variable Leistungssteuerung für das erste Leuchtmittel, durch die sowohl die erste als auch die zweite Beleuchtungsfunktion realisierbar ist. Dabei kann die Leistungssteuerung so vorgenommen werden, daß bei ausgeschalteter erster Beleuchtungsfunktion die Leistung der zweiten Beleuchtungsfunktion entspricht. Ist es hingegen erforderlich, beide Beleuchtungsfunktionen gleichzeitig zu realisieren, beispielsweise Rück- und Bremslicht bei Ausfall des für die zweite Beleuchtungsfunktion Bremslicht vorgesehenen Leuchtmittels zu realisieren, so erfolgt die Leistungssteuerung des ersten Leuchtmittels in der Weise, daß diesem die größere der für die beiden Beleuchtungsfunktionen erforderliche Leistung zugeführt wird. Für das Beispiel Rück- und Bremslicht bedeutet dies bei einer Leistung von beispielsweise 5 Watt für das Rücklicht und 21 Watt für das Bremslicht, bezogen auf jede der eingesetzten Leuchten, daß bei Ausfall einer der beiden Bremsleuchten die benachbarte Rückleuchte mit 21 Watt versorgt wird.

Zusätzlich besteht die Möglichkeit, mit Hilfe ein und desselben Leuchtmittels zwei verschiedene Beleuchtungsfunktionen zu realisieren. Hierzu wird das Leuchtmittel mit der Leistung angesteuert, die für die jeweilige Beleuchtungsfunktion erforderlich ist. Im Falle des Rück- und Bremslichts erfolgt die Ansteuerung somit mit 5 bzw. 21 Watt. Ist es dabei erforderlich, beide Beleuchtungsfunktionen gleichzeitig zu realisieren, so kann dies hierbei ebenfalls in der Weise vorgenommen werden, daß das Leuchtmittel mit der maximalen der beiden erforderlichen Leistungen, hier 21 Watt angesteuert wird. Es ist sogar möglich, in diesem Fall die zugeführte Leistung noch zu erhöhen, um hinsichtlich der Leuchtkraft einen Unterschied zwischen den beiden Betriebsfällen, hier Bremslicht allein bzw. Bremslicht in Verbindung mit dem Rücklicht, herzustellen. Entsprechend kann für das Beispiel Abblend- bzw. Fernlicht einerseits und Standlicht andererseits die Funktion 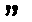 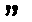 Standlicht allein" durch eine leistungsarme Ansteuerung des Abblendlicht-Leuchtmittels realisiert werden.

Die Leistungssteuerung des zwei Beleuchtungsfunktionen zugeordneten Leuchtmittels bzw. der beiden unterschiedlichen Beleuchtungsfunktionen zugeordneten Leuchtmittel kann so vorgenommen werden, daß die bzw. das Leuchtmittel stets mit der maximalen Leistung für die gewünschten Beleuchtungsfunktionen angesteuert werden. Im Falle von Rück- und Bremslicht werden somit zwei voneinander getrennte Glühfäden mit der größeren der beiden Leistungen, hier jeweils 21 Watt für die Funktion Bremslicht, angesteuert. Auch bei Ausfall eines der beiden Glühfäden entspricht die ausgesandte Leistung zumindest annähernd der für die beiden Beleuchtungsfunktionen erforderlichen Leistung.

Demgegenüber ergibt sich eine deutliche Verbesserung, wenn die Leistungssteuerung in Abhängigkeit von Funktions-Überwachungseinrichtungen der Leuchtmittel erfolgt. Nur bei Ausfall eines Leuchtmittels wird das für die andere Beleuchtungsfunktion vorgesehene, benachbart angeordnete Leuchtmittel als Ersatz herangezogen. Damit ist das Erscheinungsbild des Kraftfahrzeugs bei ordnungsgemäßer Funktion sämtlicher Leuchtmittel unverändert und nur bei Ausfall eines Leuchtmittels in dem Umfang verändert, wie es durch die Realisierung der Notfunktion erforderlich ist.

In der Zeichnung ist ein Ausführungsbeispiel der Erfindung dargestellt.

Es zeigt
- Fig. 1: den prinzipiellen Aufbau einer erfindungsgemäßen Beleuchtungsvorrichtung und
- Fig. 2: die leistungsmäßige Beschaltung der Beleuchtungsanlage von Fig. 1 zur Realisierung verschiedener Beleuchtungsfunktionen.

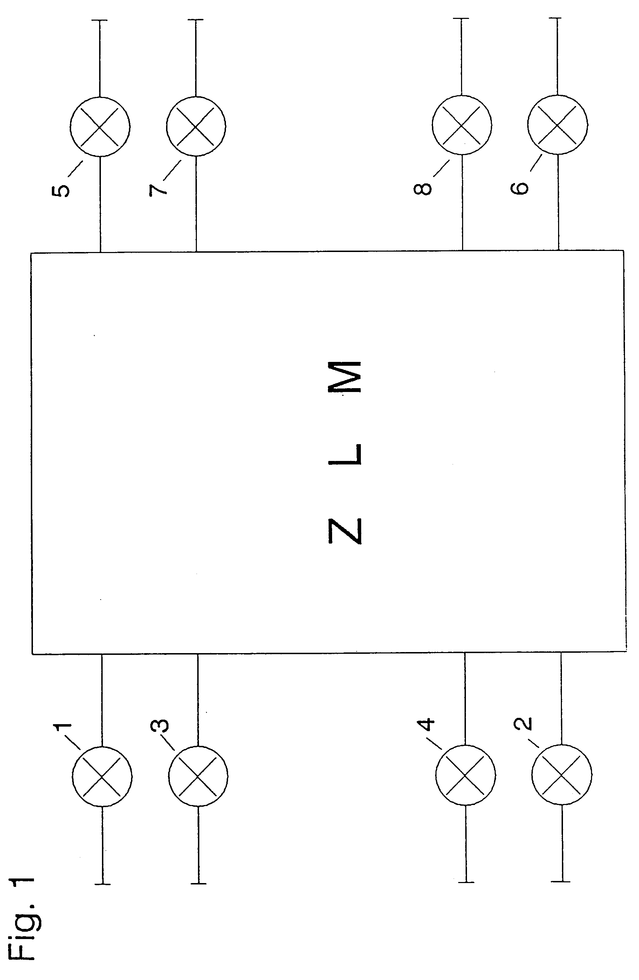

Die Beleuchtungsvorrichtung von Fig. 1 enthält ein mit ZLM bezeichnetes zentrales Lichtmodul, das abhängig von nicht dargestellten Betätigungsschaltern für die verschiedenen Beleuchtungsfunktionen die in einem Kraftfahrzeug vorgesehenen Leuchtmittel beschaltet. Bei diesen Leuchtmitteln handelt es sich an der Stirnseite um zwei Glühfäden 1 und 2 für das Abblendlicht, Glühfäden 3 und 4 für das Fernlicht, von denen die Glühfäden 1 bis 4 in je einem Front-Scheinwerfer (nicht dargestellt) des Kraftfahrzeugs angeordnet sind. Ferner sind am Heck Glühfäden 5 bis 8 vorhanden, die je in einer zugeordneten Rückleuchte (nicht dargestellt) des Kraftfahrzeugs angeordnet sind und mit deren Hilfe die Beleuchtungsfunktionen Rücklicht, Bremslicht und Nebelschlußlicht realisierbar sind.

Jeder der Glühfäden 1 bis 8 ist individuell von ZLM aus mit elektrischer Leistung beaufschlagbar. Ferner ist neben der gewünschten Beleuchtungsfunktion auch der evtl. Ausfall eines Glühfadens erfaßbar und durch eine entsprechende Kombinationsmaßnahme zu beheben bzw. zu mildern. Hierzu sind in ZLM nicht dargestellte Strom- bzw. Widerstandsmesser für die zu den Glühfäden 1 bis 8 führenden Leitungen vorgesehen.

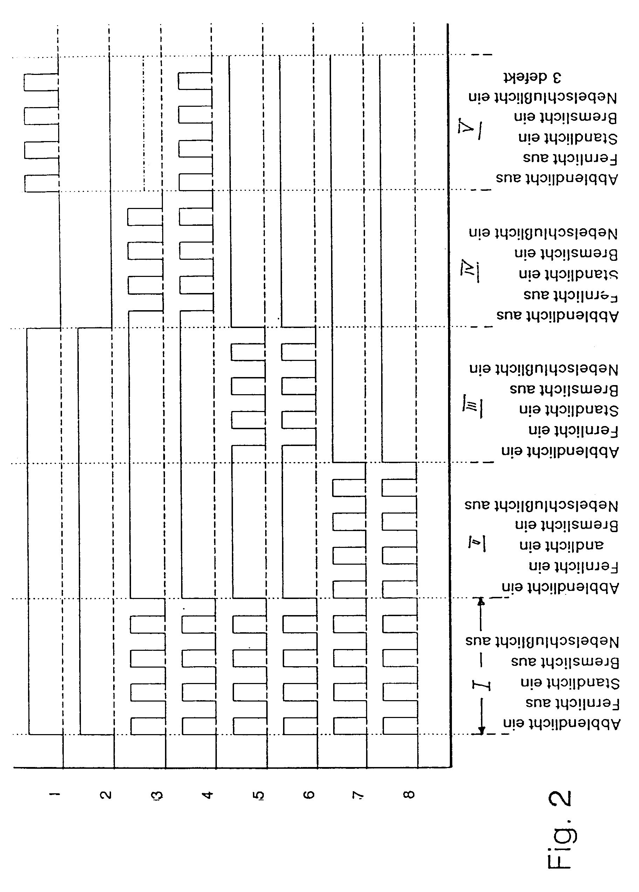

Im Normalfall, d.h. bei ordnungsgemäßer Funktion der Glühfäden 1 bis 8 werden diese vom ZLM mit der erforderlichen Leistung für die jeweilige Beleuchtungsfunktion bestromt. Dies ist anhand des in Fig. 2 dargestellten Diagramms für die Glühfäden 1 bis 8 und die Schaltung der verschiedenen, mit I bis V bezeichneten Kombinationen von Lichtfunktionen dargestellt. Die zu den einzelnen Glühfäden 1-8 dargestellten Impulsdiagramme geben die mit Hilfe des bekannten Pulsweitenmodulationsverfahren den einzelnen Glühfäden zugeführte Spannung wieder, aus denen sich die zugeführte Leistung über den quadratischen Zusammenhang berechnen läßt.

In I soll Abblend- und Standlicht eingeschaltet sein, während die Funktionen Fernlicht, Bremslicht und Nebelschlußlicht ausgeschaltet sind. Die Glühfäden 1 und 2 (für Abblendlicht) liegen kontinuierlich an Betriebsspannung. Die Glühfäden 3 und 4 dienen nunmehr dazu, die Funktion Standlicht zu realisieren. Sie werden getaktet an die Betriebsspannung angelegt. Dabei ist die Taktzeit so gewählt, daß die zugeführte Leistung - gemittelt - gleich der erforderlichen Leistung von 5 Watt entspricht.

Auch die Glühfäden 5 bis 8 werden getaktet betrieben. Damit wird in den auf den beiden Seiten angeordneten Glühfäden-Doppel 5/7 bzw. 6/8 die Funktion Stand- bzw. Begrenzungslicht realisiert. Die Taktzeit ist wiederum so gewählt, daß die zugeführte Leistung gleich dem erforderlichen Wert von jeweils 5 Watt entspricht.

In II sollen bis auf die Funktion "Nebelschlußlicht" die Beleuchtungsfunktionen Abblend-, Fern-, Stand- und Bremslicht realisiert sein. Bis auf die Glühfäden 7 und 8 liegen alle Glühfäden 1 bis 6 kontinuierlich an Betriebsspannung. Dabei wird mit den Glühfäden 1 und 2 Abblendlicht, den Glühfäden 3 und 4 Fernlicht und den Glühfäden 5 und 6 die Funktion Bremslicht realisiert. Die Funktion Standlicht wird, da sie gegenüber den Funktionen Abblend- und Fernlicht nicht wahrnehmbar ist, nicht gesondert berücksichtigt.

In III sollen bis auf die Funktion Bremslicht sämtliche vorgesehenen Lichtfunktionen realisiert werden. Im Unterschied zu II ist nun das Glühfäden-Doppel 7 und 8 für die Funktion Nebelschlußlicht kontinuierlich an Betriebsspannung angelegt, während das Glühfäden-Doppel 5 und 6 ("Bremslicht aus") nur noch getaktet betrieben ist und damit die Funktion Stand- bzw. Begrenzungslicht liefert.

In IV soll Abblend- und Fernlicht ausgeschaltet sein, während Standlicht, Bremslicht und Nebelschlußlicht eingeschaltet sind. Die Glühfäden 1 und 2 sind dabei spannungslos, die Glühfäden 3 und 4 (für die Funktion "Standlicht") getaktet betrieben, während die übrigen Glühfäden 5 bis 8 für die Funktionen Bremslicht und Nebelschlußlicht kontinuierlich an Betriebsspannung angelegt sind.

Schließlich ist in V eine Situation dargestellt, bei der die Funktion eines defekten Glühfadens, hier des Glühfadens 3, durch einen ansonsten nicht oder mit zumindest geringerer Leistung versorgten Glühfaden übernommen wird. Der Glühfaden 3 sollte dabei zusammen mit dem Glühfaden 4 die Funktion Standlicht realisieren. Sein Ausfall wird nunmehr durch den benachbart angeordneten Glühfaden 1 übernommen, der wie der Glühfaden 4 getaktet eingeschaltet und mit derselben Leistung versorgt ist.

Entsprechend kann beispielsweise der Ausfall des Glühfadens 7 zur Realisierung der Funktion Nebelschlußlicht mit Hilfe des Glühfadens 5 kompensiert werden, sofern dieser leistungsmäßig wie der intakte Glühfaden 7 angesteuert wird. Der Glühfaden 5 wird somit in diesem Fall kontinuierlich an Betriebsspannung gelegt, unabhängig davon, welche Funktion der Glühfaden 5 eigentlich realisieren muß.

## Patentansprüche

1. Beleuchtungsvorrichtung für Kraftfahrzeuge mit einer ersten Beleuchtungsfunktion, die durch je ein erstes Leuchtmittel enthaltende erste Leuchten realisierbar ist und mit einer zweiten Beleuchtungsfunktion, die mittels einer ein Leuchtmittel enthaltenden und zumindest in räumlicher Nähe zu einer der ersten Leuchten angeordneten zweiten Leuchte realisierbar ist,
dadurch gekennzeichnet, daß beide Leuchtmittel individuell ansteuerbar sind und daß mittels der Leuchtmittel eine dritte Beleuchtungsfunktion realisierbar ist.

2. Beleuchtungsvorrichtung nach Anspruch 1,
dadurch gekennzeichnet, daß die dritte Beleuchtungsfunktion durch Ansteuerung zumindest eines der Leuchtmittel mit einer Leistung realisierbar ist, die höher als die für die erste oder die zweite Beleuchtungsfunktion erforderliche Leistung ist.

3. Beleuchtungsvorrichtung nach Anspruch 1 oder 2,
dadurch gekennzeichnet, daß die Leistungssteuerung der Leuchtmittel in Abhängigkeit von Funktions-Überwachungseinrichtungen der Leuchten erfolgt.

## Claims

1. A lighting device for motor a vehicle, having a first lighting function implemented by first lamps each containing a first lighting means, and a second lighting function implemented by second lamps containing at least one lighting means and disposed at least in the spatial neighbourhood of one of the first lamps, characterised in that both lighting means are individually actuatable and a third lighting function can be performed by the lighting means.

2. A lighting device according to claim 1, characterised in that the third lighting function is performed by actuating at least one of the lighting means at a power which is higher than the power required for the first or the second lighting function.

3. A lighting device according to claim 1 or 2, characterised in that the power of the lighting means is controlled in dependence upon means for monitoring the operation of the lamps.

## Revendications

1. Dispositif d'éclairage pour véhicules avec une première fonction d'éclairage, qui peut être réalisée par un premier appareil d'éclairage contenant un moyen d'éclairage et avec une seconde fonction d'éclairage, qui peut être réalisée au moyen d'un second appareil d'éclairage disposé au moins à proximité de l'un des premiers appareils d'éclairage, dispositif d'éclairage
caractérisé en ce que
les deux moyens d'éclairage peuvent être commandés individuellement et en ce qu'à l'aide du moyen d'éclairage on peut réaliser une troisième fonction d'éclairage.

2. Dispositif d'éclairage selon la revendication 1,
caractérisé en ce que
la troisième fonction d'éclairage peut être réalisée en commandant au moins l'un des moyens d'éclairage avec une puissance qui est plus élevée que la puissance nécessaire pour la première ou la deuxième fonction d'éclairage.

3. Dispositif d'éclairage selon la revendication 1 ou 2,
caractérisé en ce que
la commande de puissance du moyen d'éclairage a lieu en fonction des dispositifs de contrôle du fonctionnement des appareils d'éclairage.
